# EUROPEAN PATENT SPECIFICATION

(11) **EP 2 111 939 B1**
(45) Date of publication and mention of the grant of the patent: **03.07.2013**
(21) Application number: 09158196.7
(22) Date of filing: 17.04.2009
(51) Int. Cl.: B23D 47/04, B27B 5/065

(54) **Cutting machine**
Schneidemaschine
Machine à découper

(30) Priority: 21.04.2008 IT BO20080246
(43) Date of publication of application: 28.10.2009
(73) Proprietor: Naldi, Valter, 40137 Bologna (IT)
(72) Inventor: Naldi, Valter, 40137 Bologna (IT)

(56) References cited:
- EP-A1- 0 292 635
- EP-A1- 2 316 602
- WO-A1-2009/107099

## Description

The present invention relates to a cutting machine for cutting packs of panels, and featuring a special pusher.

The Applicant's European Patent EP-B9-EP1510276 describes and claims a cutting machine for cutting packs of panels.

The cutting machine in the above patent comprises a cutting section; and a first system for moving first packs of panels with a first carriage comprising a number of first grippers for moving the packs of panels.

The first carriage is supported on two parallel beams.

The cutting machine also comprises at least one second system for moving second packs of panels and operated independently of the first system.

The second system in turn comprises a second carriage with second grippers for moving second packs of panels.

The cutting machine is designed so the second grippers of the second system can be inserted in the work area of the first system. The first and second system work on at least two packs of panels to perform different cutting schemes, but both using the same work area and same cutting section.

In one particular embodiment described in EP-B9-1510276, the first and second system share a beam, along which the two respective carriages run.

Given the widely differing dimensions of the formats cut from the panels, the effective thrust width of the lateral carriage (of the second system) should at least equal the maximum width of the panels that can be cut by the second system.

This obviously calls for a machine with a large number of grippers and/or pushers, which is expensive and difficult to amortize.

The preamble of claim 1 is based on EP 0 292 635.

The solution to the problem proposed in the present invention is aimed at reducing the cost of equipping the lateral secondary pusher of the second system.

That is, in the solution according to the invention, a carriage is equipped with an extractable support that, when necessary, is extracted transversely to effectively support the panel to be cut, and prevent it from rotating as it moves over the work area to the cutting line.

In another solution, not shown, the extractable lateral support is carried by one of the grippers.

Accordingly, according to the present invention, there is provided a cutting machine featuring a special lateral support, as claimed in the accompanying Claims.

A non-limiting embodiment of the present invention will be described by way of example with reference to the accompanying drawings, in which:
Figure 1 shows a plan view of the cutting machine according to the present invention; more specifically, configuration 1/A shows both the grippers of a second system excluded from the panel table and, hence, the work area; and configuration 1/B shows all the grippers included in the work area;
Figure 2 shows a section A-A of a portion of the Figure 1 cutting machine;
Figure 3 shows a plan view of part of the Figure 1 and 2 machine, in which the second system grippers are located close to the cutting line, and, given the small width of the pack of panels involved, a lateral support is withdrawn;
Figure 4 shows the same plan view as in Figure 3, in which the second system grippers are again located close to the cutting line, but, given the large width of the pack of panels, the lateral support is extracted;
Figure 5 shows an enlarged front view of the grippers and lateral support, showing alignment of the gripper and lateral support locators.

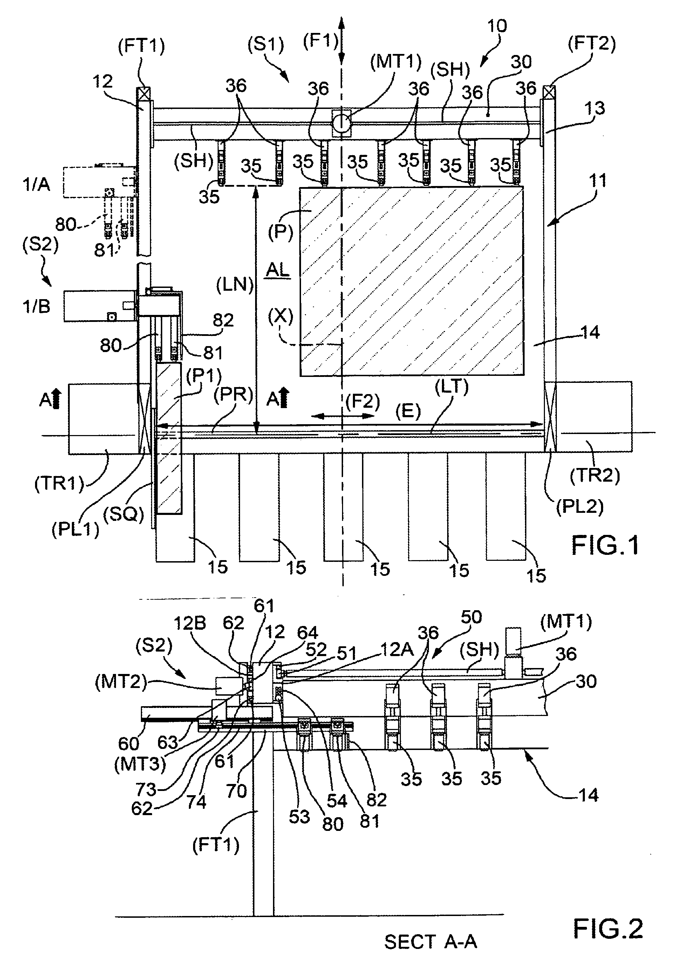

Number 10 in Figure 1 indicates as a whole a cutting machine in accordance with the present invention.

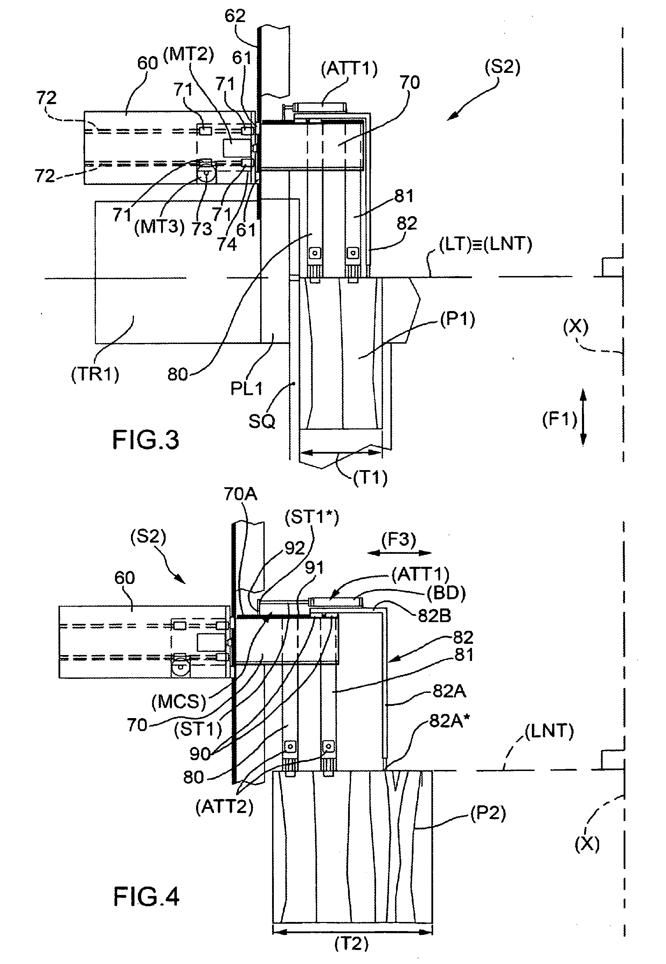

For the sake of clarity, Figures 3, 4, 5 show no panel or pack of panels being worked by the first system.

A cutting machine in accordance with the invention, however, is capable of operating both systems on the same cutting line, either individually or simultaneously on two packs of panels.

Cutting machine 10 in Figure 1 comprises a frame 11, in turn comprising two lateral guide beams 12, 13 (Figure 1) parallel to each other and to a longitudinal central axis (X).

Both lateral guide beams 12, 13 are fixed both longitudinally and, more importantly, crosswise to axis (X).

As shown in Figure 1, the two lateral guide beams 12, 13 rest on two rear feet (FT1), (FT2) and on two corresponding front posts (PL1), (PL2).

Each front post (PL1), (PL2) is located at a respective end of an effective cutting length (E) of the cutting line (LT).

In other words, lateral guide beam 12 rests on rear foot (FT1) and corresponding front post (PL1); and lateral guide beam 13 rests on rear foot (FT2) and corresponding front post (PL2).

As shown in Figures 1 and 3, a first end portion (TR1) of cutting machine 10 is attached to front post (PL1), and a second end portion (TR2) of cutting machine 10 is contiguous to front post (PL2).

End portions (TR1), (TR2) allow the panel cutting blade to completely overrun effective cutting length (E). That is, cutting line (LT) extends through front posts (PL1), (PL2) into end portions (TR1), (TR2).

A square (SQ) for squaring the packs of panels is fixed to front post (PL1).

Devices (not shown) at the rear of cutting machine 10 feed packs of panels to a first system (S1) for moving packs of panels (P) (Figures 1, 2, 3, 4, 5).

More specifically, the first system (S1) for moving panels (P) extends along axis (X) (Figure 1), and comprises a system of supporting rollers (not shown) which form a horizontal table 14 for supporting and moving the panels to cutting line (LT). Table 14 is bounded widthwise by the effective cutting length (E) of cutting line (LT), and lengthwise by the effective travel (LN) of first system (S1).

Table 14 constitutes the work area (AL) of first system (S1).

Table 14 also extends ideally in known manner into a number of small supporting surfaces 15 beyond cutting line (LT).

Panels (P) are held firmly during the cutting operation by a pressure device (PR) (Figure 1) located in known manner at cutting line (LT).

In actual use, an operator (not shown) moves in known manner between supporting surfaces 15 to position the panels by hand with respect to cutting line (LT) according to the desired cutting plan.

First system (S1) also comprises a top carriage 30 (Figures 1, 2) for feeding the panels - in the two-way direction indicated by arrow (F1) and parallel to table 14 and axis (X) - to a cutting tool (not shown) located at cutting line (LT). The cutting tool, mounted on a carriage (not shown), is moved in the two-way direction indicated by arrow (F2), parallel to table 14, and perpendicular to direction (F1) and axis (X) (Figure 1).

Work area (AL) is defined by the distance (LN) between cutting line (LT) and the ends of grippers 35 when carriage 30 is in the initial rest position shown in Figure 1, and by the effective cutting length (E) of cutting line (LT).

Carriage 30 is fitted in known manner with a number of grippers 35.

As shown in more detail in Figure 2, a drive 50 of carriage 30 comprises, in known manner, at least an electric motor (MT1) which, in the embodiment shown, is mounted at the mid-point along carriage 30.

Electric motor (MT1) (by means of respective countershafts (SH)) rotates two pinions 51 (only one shown in Figure 2), each of which meshes with a respective rack 52 extending the whole length of the corresponding lateral guide beam 12, 13 to which it is fitted.

As shown in Figure 2, a rail 53 beneath pinion 51 and respective rack 52 supports a number of wheels 54, which support the weight of carriage 30, grippers 35, and various actuating devices of carriage 30.

Pinion 51, respective rack 52, rail 53, and wheels 54 are all located alongside a first lateral face 12A of beam 12.

Cutting machine 10 also comprises a second system (S2) for moving second packs of panels and located at beam 12.

Table 14 (or part of it) also provides for supporting and handling the second packs of panels, and so also constitutes the work area (AL) of second system (S2).

More specifically, all the drive mechanisms of second system (S2) are located alongside a second face 12B of beam 12.

The system (S2) shown in the drawings comprises a first carriage 60 connected in sliding manner to face 12B of beam 12 by four advantageously "dove-tail" skids 61, each inserted inside a respective groove 62 extending parallel to axis (X).

First carriage 60 is also moved in the two-way direction indicated by arrow (F1) by an electric motor (MT2) integral with first carriage 60 and having a pinion 63 which meshes with a rack 64 fixed to face 12B.

System (S2) also comprises a second carriage 70 mounted in sliding manner on first carriage 60.

More specifically, by means of advantageously "dove-tail" skids 71 inserted inside respective grooves 72, second carriage 70 moves with respect to first carriage 60 in the two-way direction indicated by arrow (F2) and, as stated, perpendicular to direction (F1).

As shown in more detail in Figures 2 and 3, second carriage 70 is moved with respect to first carriage 60 by an electric motor (MT3) integral with first carriage 60 and having a pinion 73 which meshes with a rack 74 in turn integral with second carriage 70.

As stated, rotation of pinion 73 in one direction or the other moves second carriage 70 with respect to first carriage 60 in one or other of the two directions indicated by arrow (F2) (perpendicular to direction (F1) and axis (X)).

In the example shown in the drawings, second carriage 70 is associated with two grippers 80, 81 and a lateral support 82.

Whereas grippers 80, 81 are fixed with respect to second carriage 70, lateral support 82 is movable transversely back and forth in the two-way direction indicated by arrow (F3), which is parallel to direction (F2) and therefore perpendicular to direction (F1) and axis (X).

Lateral support 82 is movable transversely by means of a shift mechanism (MCS) comprising an actuator (ATT1) with a rod (ST1) (Figure 4).

In the embodiment shown in the drawings, lateral support 82 is substantially L-shaped (or "square"-shaped), and comprises a first portion 82A parallel to axis (X), and a second portion 82B perpendicular to axis (X). Portion 82A has a free end 82A* against which, as described below, the pack of panels (P) rests in use.

In the solution shown, to move lateral support 82 with respect to carriage 70 and grippers 80, 81, shift mechanism (MCS) comprises skids 90 integral with second portion 82B and inserted inside respective longitudinal runners 91 fixed to a face 70A of carriage 70.

Whereas the main body (BD) of actuator (ATT1) is integral with second portion 82B, the free end (ST1*) of rod (ST1) rests against a stop 92 projecting from face 70A of carriage 70.

In short, shift mechanism (MCS) comprises an actuator (ATT1) (with rod (ST1)), skids 90 inserted inside longitudinal runners 91, and a stop 92.

In another solution, not shown, lateral support 82 is fitted directly to one of grippers 35, 80, 81.

In actual use, in the Figure 1, 2 and 3 configuration of machine 10, the transverse dimension (T1) of the pack of panels (P1) does not warrant extracting lateral support 82, in that grippers 80, 81 are sufficient to keep the pack of panels (P1) stable as it moves in direction (F1) towards cutting line (LT).

In the Figure 4 configuration, on the other hand, lateral support 82 of second system (S2) is extracted in direction (F3) to a more central position in work area (AL).

In this case, the transverse dimension (T2) of the pack of panels (P2) is such that grippers 80, 81 alone are not sufficient to reliably keep the pack of panels (P2) stable as it moves in direction (F1).

In this connection, it is important to note that furniture-making panel sizes call for a panel positioning tolerance of +/- 0.1 mm.

Therefore, to prevent the pack of panels (P2) from rotating slightly as it moves in direction (F1), even as a result of friction between the underside surface of the bottom panel in pack (P2) and table 14, lateral support 82 must be extracted to provide firm additional support as the pack is pushed into position.

If carriage 30 of first system (S1) is fitted with grippers 35 close to grippers 80, 81 of second system (S2), extraction of lateral support 82 towards the centre of work area (AL) raises any interfering grippers 35 by means of respective actuating pistons 36.

In another embodiment, not shown, any interfering grippers 35 may even be withdrawn to make room for lateral support 82.

An electronic central control unit (not shown) controls and automatically adjusts how far lateral support 82 is extracted/withdrawn as a function of the transverse dimension (T2) of the pack of panels (P2), and so also determines lift or withdrawal of any interfering grippers 35.

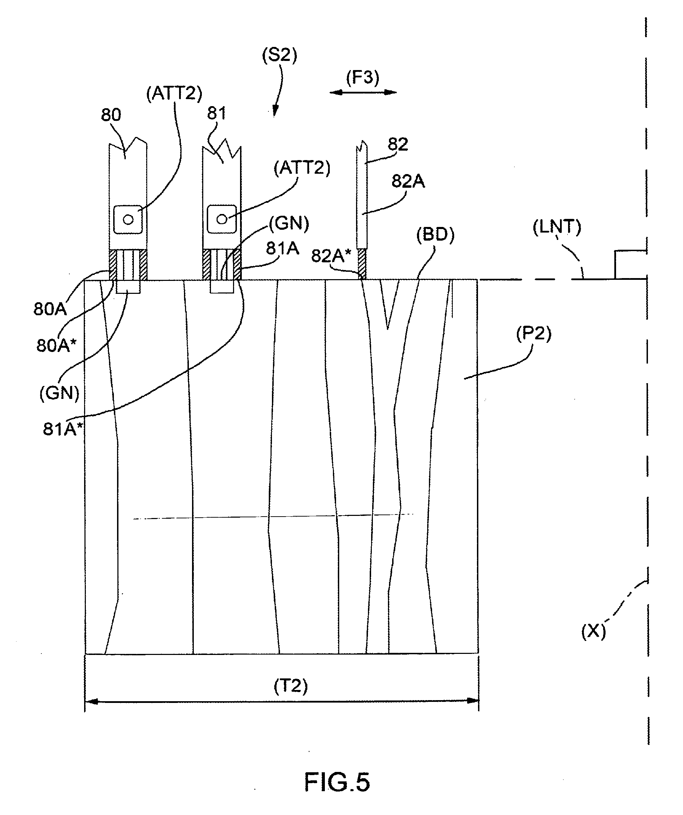

As shown in detail in Figure 5, each gripper 80, 81 comprises two jaws (GN) (only one jaw (GN) of each gripper 80, 81 is shown in Figure 5, the other jaw (GN) being concealed by the pack of panels (P2)), which are gripped/released by a respective actuator (ATT2) on gripper 80, 81.

Each gripper 80, 81 has a locator 80A, 81A, against which an edge (BD) of the pack of panels (P2) rests in use. Each locator 80A, 81A is located inside respective jaws (GN); locator 80A has an end surface 80A*; and locator 81A has an end surface 81A*.

It is important to note that, for it to be cut accurately, the pack of panels (P2) must rest against respective end surfaces 80A*, 81A* of locators 80A, 81A, and against the free end 82A* of portion 82A of lateral support 82.

In use, end surfaces 80A*, 81A* and free end 82A* of lateral support 82 are aligned along a line (LNT) substantially perpendicular to axis (X) (Figures 3, 4, 5).

In actual fact, however, the free end 82A* of portion 82A of lateral support 82 may even be slightly further forward than the two end surfaces 80A*, 81A*, so the pack, as it is pushed, tends to rotate and is also pushed against square (SQ), which, in certain cases, may even facilitate squaring of the panels for cutting.

As will be clear to anyone skilled in the art, everything stated regarding grippers 80, 81 also applies to straightforward pushers (not shown) with no grippers for engaging the packs of panels (P). Also, lateral support 82 may in some cases be applied to the members of first system (S1) closest to second system (S2), and extraction of the lateral support may lift or withdraw any interfering grippers of second system (S2).

## Claims

1. A cutting machine (10) for cutting packs of panels along a cutting line (LT);
the cutting machine (10) comprising:
- a first system (S1) for moving first packs of panels, and having first grippers and/or pushers (35) for moving the first packs of panels in a direction (F1);
- at least one second system (S2) comprising at least one second gripper and/or pusher (80, 81) for moving second packs of panels in the direction (F1); the first and second system (S1, S2) sharing the same cutting line (LT) and capable of operating either individually or simultaneously on two packs of panels;
and the cutting machine (10) being **characterized in that** the first system (S1) and/or the second system (S2) also comprise/s at least one lateral support (82) movable in given directions (F3) with respect to said at least one gripper and/or pusher (35, 80, 81); said at least one lateral support (82), when extracted, serving as a support for a pack of panels (P), (P2) as it is pushed into position.

2. A cutting machine (10) as claimed in Claim 1, **characterized in that**, to cut the pack of panels (P2) accurately, the pack of panels (P2) rests against respective end surfaces (80A*, 81A*) of locators (80A, 81A), and against a free end (82A*) of the lateral support (82).

3. A cutting machine (10) as claimed in Claim 2, **characterized in that** said end surfaces (80A*, 81A*) and said free end (82A*) of the lateral support (82) are aligned along a line (LNT) substantially perpendicular to a longitudinal central axis (X).

4. A cutting machine (10) as claimed in any one of the foregoing Claims, **characterized in that** the lateral support (82) has at least two degrees of freedom defined by at least two directions (F1, F2, F3).

5. A cutting machine (10) as claimed in any one of the foregoing Claims, **characterized in that** extraction of the lateral support (82) lifts or withdraws any first grippers and/or pushers (35) of the first system (S1).

6. A cutting machine (10) as claimed in any one of the foregoing Claims, **characterized in that** extraction of the lateral support (82) lifts or withdraws any first grippers and/or pushers (80, 81) of the second system (S2).

7. A cutting machine (10) as claimed in any one of the foregoing Claims, **characterized in that** the degree of extraction of the lateral support (82) is determined by the transverse dimension (T2) of the pack of panels being cut.

8. A cutting machine (10) as claimed in any one of the foregoing Claims, **characterized in that** the fastening, guide, and actuating assemblies of the lateral support (82) are fitted to a carriage (30, 60, 70) of the first system (S1) and/or the second system (S2).

9. A cutting machine (10) as claimed in any one of the foregoing Claims, **characterized in that** the fastening, guide, and actuating assemblies of the lateral support (82) are fitted to at least one gripper and/or pusher (35, 80, 81) of the first system (S1) and/or the second system (S2).

## Patentansprüche

1. Schneidemaschine (10) zum Schneiden von Packen an Paneelen entlang einer Schnittlinie (LT); wobei die Schneidemaschine (10) Folgendes aufweist:
- ein erstes System (S1), um einen ersten Packen der Panelle zu bewegen, wobei das erste System (S1) erste Greifer und/oder Drücker (35) aufweist, um die ersten Packen an Paneelen in einer Richtung (F1) zu bewegen;
- wenigstens ein zweites System (S2), welches wenigstens einen zweiten Greifer und/oder Drücker (80, 81) aufweist, um zweite Pakete an Paneelen in der besagten Richtung (F1) zu bewegen; wobei sich die ersten und zweiten Systeme (S1, S2) die übereinstimmende Schnittlinie (LT) teilen und in der Lage sind, entweder einzeln oder gemeinsam zwei Packen an Paneelen zu bearbeiten; und wobei
die Schneidemaschine (10) **dadurch gekennzeichnet ist, dass** das erste System (S1) und/oder das zweite System (S2) ergänzend wenigstens eine längserstreckte Stütze (82) aufweist, die in vorgegebenen Richtungen (F3) im Vergleich zu dem besagten wenigstens einen Greifer und/oder Drücker (35, 80, 81) ist; wobei die wenigstens eine längserstreckte Stütze (82) in ausgezogenem Zustand als Unterstützung für ein Pack an Paneelen (P, P2) dient, sobald dieses in die Position gedrückt wird.

2. Schneidemaschine (10) nach Anspruch 1, **dadurch gekennzeichnet, dass** zum akkuraten Schnitt des Packs an Paneelen (P2) das Pack an Paneelen (P2) an zugehörigen Endflächen (80A*, 81A*) von Positionsgebern (80A, 81A) sowie an einem freien Ende (82A*) der längserstreckten Stütze (82) anliegt.

3. Schneidemaschine (10) nach Anspruch 2, **dadurch gekennzeichnet, dass** die Endflächen (80A*, 81A*) und das besagte freie Ende (82A*) der längserstreckten Stütze (82) entlang einer Linie (LNT) ausgerichtet sind, welche im Wesentlichen senkrecht im Vergleich zu einer zentralen Längsachse (X) angeordnet ist.

4. Schneidemaschine (10) nach einem der vorhergehenden Ansprüche, **dadurch gekennzeichnet, dass** die längserstreckte Stütze (82) wenigstens zwei Freiheitsgrade aufweist, welche durch die wenigstens zwei Richtungen (F1, F2, F3) definiert sind.

5. Schneidemaschine (10) nach einem der vorhergehenden Ansprüche, **dadurch gekennzeichnet, dass** ein Auszug der längserstreckten Stütze (82) einen ersten Greifer und/oder Drücker (35) des ersten Systems (S1) anhebt oder wegdrückt.

6. Schneidemaschine (10) nach einem der vorhergehenden Ansprüche, **dadurch gekennzeichnet, dass** ein Auszug der längserstreckten Stütze (82) einen ersten Greifer und/oder Drücker (80, 81) des zweiten Systems (S2) anhebt oder wegdrückt.

7. Schneidemaschine (10) nach einem der vorhergehenden Ansprüche, **dadurch gekennzeichnet, dass** das Maß für den Auszug der längserstreckten Stütze (82) durch die Quererstreckung (T2) des Packens an zu schneidenden Paneelen bestimmt wird.

8. Schneidemaschine (10) nach einem der vorhergehenden Ansprüche, **dadurch gekennzeichnet, dass** die Befestigungs-, Führungs- und Betätigungseinheiten der längserstreckten Stütze (82) an eine Tragstruktur (30, 60, 70) des ersten Systems (S1) und/oder des zweiten Systems (S2) angeschlossen sind.

9. Schneidemaschine (10) nach einem der vorhergehenden Ansprüche, **dadurch gekennzeichnet, dass** die Befestigungs-, Führungs- und Betätigungseinheiten der längserstreckten Stütze (82) an wenigstens einen Greifer und/oder Drücker (35, 80, 81) des ersten Systems (S1) und/oder des zweiten Systems (S2) angeschlossen sind.

## Revendications

1. Machine à découper (10) pour découper des paquets de panneaux le long d'une ligne de découpe (LT) ;
la machine de découpe (10) comprenant :
- un premier système (S1) pour déplacer des premiers paquets de panneaux, et comportant des premiers préhenseurs et/ou poussoirs (35) pour déplacer les premiers paquets de panneaux dans une direction (F1) ;
- au moins un second système (S2) comprenant au moins un second préhenseur et/ou poussoir (80, 81) pour déplacer des seconds paquets de panneaux dans la direction (F1) ; les premier et second systèmes ((S1), (S2)) partageant la même ligne de découpe (LT) et capables de fonctionner individuellement ou simultanément sur les deux paquets de panneaux ;
la machine de découpe (10) étant **caractérisée en ce que** le premier système (S1) et/ou le second système (S2) comprend/comprennent également au moins un support latéral (82) mobile dans des directions (F3) données par rapport audit au moins un préhenseur et/ou poussoir (35, 80, 81) ; ledit au moins un support latéral (82), lorsqu'il est extrait, servant de support pour un paquet de panneaux ((P), (P2)) lorsqu'il est poussé en position.

2. Machine à découper (10) selon la revendication 1, **caractérisée en ce que**, pour découper le paquet de panneaux (P2) de manière précise, le paquet de panneaux (P2) repose contre des surfaces d'extrémité respectives (80A*, 81A*) de localisateurs (80A, 81A) et contre une extrémité libre (82A*) du support latéral (82).

3. Machine à découper (10) selon la revendication 2, **caractérisée en ce que** lesdites surfaces d'extrémité (80A*, 81A*) et ladite extrémité libre (82A*) du support latéral (82) sont alignées le long d'une ligne (LNT) sensiblement perpendiculaire à un axe central longitudinal (X).

4. Machine à découper (10) selon l'une quelconque des revendications précédentes, **caractérisée en ce que** le support latéral (82) a au moins deux degrés de liberté définis par au moins deux directions ((F1), (F2), (F3)).

5. Machine à découper (10) selon l'une quelconque des revendications précédentes, **caractérisée en ce que** l'extraction du support latéral (82) soulève ou retire l'un des premiers préhenseurs et/ou poussoirs (35) du premier système (S1),

6. Machine à découper (10) selon l'une quelconque des revendications précédentes, **caractérisée en ce que** l'extraction du support latéral (82) soulève ou retire l'un des premiers préhenseurs et/ou poussoirs (80, 81) du second système (S2).

7. Machine à découper (10) selon l'une quelconque des revendications précédentes, **caractérisée en ce que** le degré d'extraction du support latéral (82) est déterminé par la dimension transversale (T2) du paquet de panneaux en cours de découpe.

8. Machine à découper (10) selon l'une quelconque des revendications précédentes, **caractérisée en ce que** les ensembles de fixation, de guidage et d'actionnement du support latéral (82) sont fixés à un chariot (30, 60, 70) du premier système (S1)) et/ou du second système (S2)).

9. Machine à découper (10) selon l'une quelconque des revendications précédentes, **caractérisée en ce que** les ensembles de fixation, de guidage et d'actionnement du support latéral (82) sont fixés à au moins un préhenseur et/ou poussoir (35, 80, 81) du premier système (S1)) et/ou du second système (S2).
